# DEMANDE DE BREVET EUROPEEN

(11) **EP 4 174 424 A1**
(43) Date de publication de la demande: **03.05.2023**
(21) Numéro de dépôt: 22203665.9
(22) Date de dépôt: 25.10.2022
(51) Int. Cl.: F25J 3/04, F25J 1/02, F17C 9/00, B64D 37/00, A62C 3/08, F02C 7/224, F02C 3/22

(54) **SYSTEME DE GENERATION D'UN GAZ INERTE POUR AERONEF UTILISANT DE L'HYDROGENE LIQUIDE**

(30) Priorité: 27.10.2021 FR 2111432
(71) Demandeur: Airbus Operations SAS, 31060 Toulouse (FR)
(72) Inventeur: BELLEVILLE, Mathieu, 31060 TOULOUSE (FR); HORDE, Theophile, 31060 TOULOUSE (FR)
(74) Mandataire: Cabinet Le Guen Maillet

(57) **Abrégé**

L'invention concerne un système (10) de génération d'un fluide inerte, embarqué dans un aéronef (1), le système (10) de génération comprenant une pluralité de dispositifs configurés pour opérer chacun, successivement, une séparation de composantes d'un fluide primaire initialement prélevé sous forme d'air chaud comprimé, le système (10) comprenant au moins un échangeur thermique (110) configuré pour opérer une séparation de composantes, par changement de phase d'une composante dudit fluide primaire, opérant un refroidissement dudit fluide primaire grâce à de l'hydrogène liquide, alimenté en hydrogène liquide prélevé dans un réservoir (1000) de l'aéronef.

Avantageusement, il est ainsi possible de générer un gaz inerte sans requérir de séparation membranaire de l'azote et de l'oxygène, et tout en facilitant le réchauffement de l'hydrogène liquide stocké et utilisé comme source d'énergie dans l'aéronef.

## Description

### DOMAINE TECHNIQUE

La présente invention concerne un procédé de génération d'un gaz inerte pour une utilisation dans un aéronef ainsi qu'un système embarqué dans un aéronef configuré pour mettre en œuvre ce procédé. L'invention concerne plus précisément un procédé de génération de gaz inerte opérant une distillation fractionnée d'un air comprimé dans l'aéronef, en vue d'obtenir le gaz inerte, dans un aéronef utilisant de l'hydrogène liquide comme source d'énergie, et un système exécutant ce procédé, embarqué dans un aéronef.

### ÉTAT DE LA TECHNIQUE ANTÉRIEURE

L'hydrogène liquide (ou plus exactement le dihydrogène liquide de formule H2) est un fluide cryogénique qui peut être utilisé comme source d'énergie pour la production d'électricité. Ainsi, par exemple, il est possible d'utiliser une pile à hydrogène pour alimenter l'ensemble des systèmes de commande de vol et de communication d'un aéronef, ainsi que l'éclairage à bord de l'aéronef et l'alimentation de différents dispositifs accessoires utilisés dans l'aéronef. L'hydrogène liquide peut également servir de source d'énergie pour la propulsion d'un aéronef, en alimentant une pile à combustible ou encore par combustion directe, ce qui présente l'avantage de ne rejeter que de l'eau dans l'atmosphère. L'hydrogène, stocké sous forme liquide dans un réservoir de l'aéronef, doit être réchauffé pour être ainsi utilisé. En outre, lorsque l'hydrogène liquide est utilisé comme carburant, un gaz inerte est utilisé pour évacuer l'hydrogène gazeux présent dans certaines parties du système de carburant, pour éviter des risques de feu et d'explosion, notamment lors de phases de démarrage ou d'arrêt des moteurs de l'aéronef. Le gaz inerte est généralement de l'azote, obtenu en l'isolant des autres composantes d'un air prélevé à l'extérieur de l'aéronef. La séparation de l'azote des autres composantes de l'air est réalisée à l'aide d'une ou plusieurs membranes dans un système dit « d'inertage ». La ou les membranes utilisées permettent ainsi d'obtenir de l'azote, à partir de l'air qui se trouve autour de l'aéronef. Mais ces membranes sont sensibles à la pollution de l'air.

La situation peut être améliorée.

### EXPOSÉ DE L'INVENTION

Dans la présente description, un fluide dihydrogène est nommé « hydrogène », selon le terme usité en langage courant.

Un objet de la présente invention est de proposer un système d'inertage ne nécessitant pas de séparation membranaire de l'azote et de l'oxygène tout en facilitant le réchauffement de l'hydrogène liquide stocké et utilisé comme source d'énergie dans l'aéronef.

A cet effet, il est proposé un procédé de génération d'un fluide inerte, ledit procédé étant exécuté dans un aéronef, le fluide inerte étant obtenu par séparations successives de composantes d'un fluide primaire initialement prélevé sous forme d'air chaud comprimé, le procédé comprenant au moins une séparation de composantes, par changement de phase d'une composante du fluide primaire, utilisant un échangeur thermique configuré pour opérer un refroidissement du fluide primaire grâce à de l'hydrogène liquide, et alimenté en hydrogène liquide prélevé dans un réservoir de l'aéronef.

Avantageusement, il est ainsi possible d'opérer astucieusement un réchauffement de l'hydrogène liquide en vue de son utilisation à bord de l'aéronef, tout en l'utilisant comme refroidisseur à travers un ou plusieurs échangeurs thermiques pour opérer une distillation fractionnée d'un air comprimé, et générer *in fine* un gaz inerte.

Avantageusement, le gaz inerte peut alors être utilisé pour évacuer de l'hydrogène gazeux de certaines parties du système carburant de l'aéronef.

Le procédé de génération d'un fluide inerte selon l'invention peut également comporter les caractéristiques suivantes, considérées seules ou en combinaison :
- Le procédé comprend une première étape, de séparation de composantes du fluide primaire, par refroidissement du fluide primaire, adaptée à une extraction d'eau du fluide primaire, et une deuxième étape, de séparation de composantes du fluide primaire, par refroidissement du fluide primaire, adaptée à une extraction de dioxyde de carbone du fluide primaire.
- Le procédé comprend une troisième étape, de séparation de composantes du fluide primaire, par refroidissement du fluide primaire, subséquente auxdites première et deuxième étapes, et adaptée à une extraction de dioxygène du fluide primaire, sous forme liquide.
- Le procédé comprend une étape de liquéfaction du fluide primaire, subséquente auxdites première, deuxième et troisième étapes de séparation de composantes, suivie d'une étape de pompage du fluide primaire dans un réservoir, sous la forme d'azote liquide.
- Le procédé comprend en outre une étape de liquéfaction du fluide primaire, subséquente auxdites première et deuxième étapes, suivie d'une étape de réchauffement du fluide primaire liquéfié, adaptée à une extraction d'azote sous forme gazeuse du fluide primaire.
- Les étapes successives de séparation de composantes du fluide primaire, par refroidissement du fluide primaire, utilisent chacune un échangeur thermique, les échangeurs thermiques utilisés étant alimentés en parallèle, chacun via une vanne motorisée, depuis un réservoir d'hydrogène liquide de l'aéronef.
- Des étapes successives de séparation de composantes du fluide primaire, par refroidissement du fluide primaire, utilisent chacune un échangeur thermique, les échangeurs thermiques étant agencés en série de sorte que l'hydrogène liquide utilisé en entrée d'un échangeur thermique pour le refroidissement du fluide primaire lors d'une étape de séparation de composantes, provienne au moins partiellement d'une sortie d'un autre échangeur thermique utilisé pour le refroidissement du fluide primaire lors d'une autre étape de séparation de composantes du fluide primaire.
- La première étape de séparation de composantes du fluide primaire comprend un refroidissement du fluide primaire dans un échangeur thermique grâce à un air ambiant, la deuxième étape de séparation de composantes du fluide primaire comprend un refroidissement du fluide primaire dans un échangeur thermique au moyen du dioxygène sous forme liquide extrait lors de la troisième étape, et la troisième étape d'extraction du dioxygène sous forme liquide comprend un refroidissement du fluide primaire au moyen d'azote liquide en provenance du réservoir d'azote liquide.
- Le procédé comprend en outre une étape de liquéfaction du fluide primaire, subséquente aux première et deuxième étapes, dans lequel les première et deuxième étapes de séparation de composantes du fluide primaire comprennent chacune un refroidissement du fluide primaire dans un échangeur thermique, au moyen du fluide primaire liquéfié et dans lequel l'étape de liquéfaction du fluide primaire comprend un refroidissement du fluide primaire dans un échangeur thermique, au moyen de l'hydrogène liquide.

L'invention a également pour objet un système de génération d'un fluide inerte, embarqué dans un aéronef, le système de génération comprenant une pluralité de dispositifs configurés pour opérer chacun, successivement, une séparation de composantes d'un fluide primaire initialement prélevé sous forme d'air chaud comprimé, le système comprenant au moins un échangeur thermique configuré pour opérer une séparation de composantes, par changement de phase d'une composante du fluide primaire, l'échangeur thermique opérant un refroidissement du fluide primaire grâce à de l'hydrogène liquide, en étant alimenté en hydrogène liquide prélevé dans un réservoir de l'aéronef.

Un autre objet de l'invention est un aéronef comprenant un système de génération d'un fluide inerte tel que précité ou comprenant un système de génération d'un fluide inerte configuré pour exécuter un procédé de génération d'un gaz inerte tel que précédemment décrit.

### BRÈVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1a] est un schéma de principe illustrant un système de génération de gaz inerte embarqué dans un aéronef, selon un mode de réalisation ;
[Fig. 1b] est un diagramme illustrant un procédé de génération de gaz inerte exécuté dans le système représenté sur la Fig. la ;
[Fig. 2a] est un schéma de principe illustrant une première variante du système de génération de gaz inerte embarqué dans un aéronef, représenté sur la Fig. la ;
[Fig. 2b] est un diagramme illustrant un procédé de génération de gaz inerte exécuté dans le système représenté sur la Fig. 2a ;
[Fig. 3a] est un schéma de principe illustrant une deuxième variante du système de génération de gaz inerte embarqué dans un aéronef, représenté sur la Fig. la ;
[Fig. 3b] est un diagramme illustrant un procédé de génération de gaz inerte exécuté dans le système représenté sur la Fig. 3a ;
[Fig. 4a] est un schéma de principe illustrant une troisième variante du système de génération de gaz inerte embarqué dans un aéronef, représenté sur la Fig. 1a ;
[Fig. 4b] est un diagramme illustrant un procédé de génération de gaz inerte exécuté dans le système représenté sur la Fig. 4a ;
[Fig. 5a] est un schéma de principe illustrant une quatrième variante du système de génération de gaz inerte embarqué dans un aéronef, représenté sur la Fig. 1a ;
[Fig. 5b] est un diagramme illustrant un procédé de génération de gaz inerte exécuté dans le système représenté sur la Fig. 5a ; et,
[Fig. 6] illustre un aéronef comprenant un système de génération d'un gaz inerte, tel que déjà illustré sur l'une des figures Fig. 1a, Fig. 2a, Fig. 3a, Fig. 4a, et Fig. 5a.

### EXPOSÉ DÉTAILLÉ DE MODES DE RÉALISATION

La **Fig. la** représente de façon schématique un système 10 de génération de gaz inerte, dit système d'inertage, configuré pour générer de l'azote, qui est un gaz inerte, à partir d'un air comprimé, dans un aéronef utilisant de l'hydrogène liquide comme source d'énergie et selon un mode de réalisation. Le système 10 comprend un réservoir d'hydrogène liquide 1000 auquel est raccordée une canalisation de sortie de réservoir 1001 prévue pour distribuer de l'hydrogène liquide en plusieurs endroits du système 10 de génération de gaz inerte. L'hydrogène liquide est utilisé comme réfrigérant dans le système 10 pour refroidir un air comprimé et opérer une distillation fractionnée de cet air comprimé en vue d'obtenir de l'azote. Dans la présente description, l'utilisation du terme « en aval » désigne une position relative plus éloignée de la source d'un fluide, d'un élément par rapport à un autre élément, par opposition au terme « en amont » qui désigne une position relative plus proche de la source d'un fluide, d'un élément par rapport à un autre élément. Ainsi, par exemple, l'entrée d'un système opérant sur un fluide constitue l'élément le plus « en amont » du système et la sortie de ce système constitue un élément « en aval » de l'entrée. De façon similaire, un réservoir d'un fluide alimentant un système de traitement ou d'exploitation de ce fluide est situé « en amont » des éléments de ce système, par rapport au trajet d'écoulement du fluide et les éléments traversés par le fluide sont situés « en aval » de ce réservoir.

Le système 10 de génération de gaz inerte comprend une entrée d'air comprimé 100 par laquelle un air comprimé présentant une pression supérieure ou égale à 6 bars est inséré. L'air comprimé inséré dans le système 10 de génération d'un gaz inerte provient d'un ou plusieurs moteurs de l'aéronef qui embarque le système 10 de génération de gaz inerte. L'entrée d'air comprimé 100 est raccordée à un filtre d'entrée 101 configuré pour retenir des impuretés de l'air en provenance du ou des moteurs et éviter que ces impuretés ne puissent pénétrer dans le système 10 de génération de gaz inerte. La sortie du filtre d'entrée 101 est reliée à une canalisation 102 qui traverse successivement des équipements de séparation de composantes du fluide qui la traverse. Dans la présente description, on appelle « fluide primaire », le fluide qui traverse la canalisation 102 et qui est initialement de l'air comprimé en entrée 100 de la canalisation 102 et on appelle « canalisation primaire » la canalisation 102 ou les portions de canalisation 102 des différents équipements qu'elle traverse. Le fluide primaire est donc modifié au fur et à mesure qu'il traverse la canalisation 102 puisque des composantes de ce fluide en sont successivement extraites au cours d'étapes successives de distillation fractionnée, au fil des équipements traversés. La canalisation 102 comprend successivement, entre le filtre d'entrée 101 et une sortie de gaz inerte 139, une portion de canalisation dans un premier échangeur thermique 110, une portion de canalisation dans un premier dispositif de purge 117, une portion de canalisation dans un deuxième échangeur thermique 120, une portion de canalisation dans un deuxième dispositif de purge 127, une portion de canalisation dans un troisième échangeur thermique 130 et une portion de canalisation dans un troisième dispositif de purge 137. Ces dispositifs sont configurés pour opérer une distillation fractionnée de l'air comprimé inséré par l'entrée 100 du système 10 de génération de gaz inerte. La canalisation 102 est donc agencée de sorte que:
- la sortie du filtre d'entrée 101 est reliée à l'entrée de la portion de canalisation 102 de l'échangeur thermique 110,
- la sortie de la portion de canalisation 102 de l'échangeur thermique 110 est reliée à l'entrée du dispositif de purge 117, ou plus précisément à l'entrée de la portion de canalisation 102 du dispositif de purge 117,
- la sortie de la portion de canalisation 102 du dispositif de purge 117 est reliée à l'entrée de la portion de canalisation 102 de l'échangeur thermique 120,
- la sortie de l'échangeur thermique 120 est reliée à l'entrée du dispositif de purge 127, ou plus précisément à l'entrée de la portion de canalisation 102 du dispositif de purge 127,
- la sortie de la portion de canalisation 102 du dispositif de purge 127 est reliée à l'entrée de la portion de canalisation 102 de l'échangeur thermique 130,
- la sortie de la portion de canalisation 102 de l'échangeur thermique 130 est reliée à l'entrée du dispositif de purge 137, ou plus précisément à l'entrée de la portion de canalisation 102 du dispositif de purge 137,
- la sortie du dispositif de purge 137 est reliée à la sortie 139 du système 10 de génération d'un gaz inerte.

Chacun des échangeurs thermiques 110, 120 et 130 comprend une portion de la canalisation 102, dite canalisation primaire, traversée par le fluide primaire, et une portion d'une autre canalisation, dite canalisation secondaire, utilisée pour opérer un échange thermique avec la portion de canalisation 102 qui le traverse. Ainsi l'échangeur thermique 110 comprend une canalisation secondaire, sous la forme d'une ou plusieurs chambres traversées par la portion de canalisation 102 qu'il comprend, en vue d'opérer un échange thermique. Il en est de même pour l'échangeur thermique 120 qui comprend une canalisation secondaire, sous la forme d'une ou plusieurs chambres traversées par la portion de canalisation 102 qu'il comprend, en vue d'opérer un échange thermique. L'échangeur thermique 130 comprend, lui aussi, une canalisation secondaire, sous la forme d'une ou plusieurs chambres traversées par la portion de canalisation 102 qu'il comprend, en vue d'opérer un échange thermique.

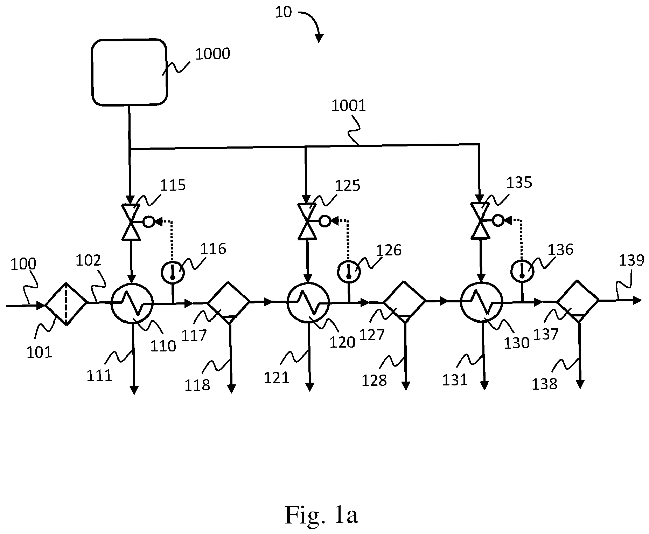

L'entrée de la canalisation secondaire de chacun des échangeurs thermiques 110, 120 et 130 est raccordée à la sortie d'une vanne motorisée, et l'entrée de chacune de ces vannes motorisées est raccordée à la canalisation 1001 qui permet de distribuer de l'hydrogène liquide en provenance d'un réservoir 1000 d'hydrogène liquide. L'hydrogène liquide est maintenu à une température de stockage d'environ 20K dans le réservoir 1000 de stockage d'hydrogène liquide. Ainsi, une vanne motorisée 115 est agencée entre la canalisation 1001 et l'entrée de la canalisation secondaire de l'échangeur thermique 110, en vue de contrôler une distribution d'hydrogène liquide en provenance du réservoir 1000 dans la canalisation secondaire de l'échangeur 110 et de refroidir la portion de canalisation 102, primaire, dans l'échangeur thermique 110. De façon similaire, une vanne motorisée 125 est agencée entre la canalisation 1001 et l'entrée de la canalisation secondaire de l'échangeur thermique 120, en vue de contrôler une distribution d'hydrogène liquide en provenance du réservoir 100 dans la canalisation secondaire de l'échangeur 120 et de refroidir la portion de canalisation 102, primaire, dans l'échangeur thermique 120. De façon similaire encore, une vanne motorisée 135 est agencée entre la canalisation 1001 et l'entrée de la canalisation secondaire de l'échangeur thermique 130, en vue de contrôler une distribution d'hydrogène liquide en provenance du réservoir 1000 dans la canalisation secondaire de l'échangeur 130 et de refroidir la portion de canalisation 102, primaire, dans l'échangeur thermique 130. Chaque sortie de portion de la canalisation primaire 102 d'un échangeur thermique parmi les échangeurs thermiques 110, 120 et 130 est équipée d'un dispositif de mesure de température du fluide primaire en sortie de l'échangeur, de sorte à mesurer la température du fluide primaire en sortie de la portion de canalisation primaire 102 de l'échangeur et à contrôler la vanne motorisée située en entrée de la canalisation secondaire du même échangeur pour asservir le refroidissement opéré dans l'échangeur thermique à l'aide de l'hydrogène liquide stocké dans le réservoir 1000 d'hydrogène liquide. Ainsi, la sortie de la conduite primaire 102 de l'échangeur thermique 110 comprend un dispositif de mesure de température 116 du fluide primaire dans la canalisation 102, la sortie de la conduite primaire 102 de l'échangeur thermique 120 comprend un dispositif de mesure de température 126 du fluide primaire dans la canalisation 102, et la sortie de la conduite primaire 102 de l'échangeur thermique 130 comprend un dispositif de mesure 136 de température du fluide primaire dans la canalisation 102. L'ouverture de la vanne motorisée 115 est donc contrôlée en fonction de la température du fluide primaire mesurée par le dispositif de mesure de température 116. Il en est de même pour les ouvertures des vannes motorisées 125 et 135 qui sont respectivement contrôlées en fonction des températures mesurées par les dispositifs de mesure de température 126 et 136. Selon un mode de réalisation, une unité de contrôle (non représentée sur la Fig. 1a) des vannes motorisées contrôle l'ensemble des vannes motorisées. Selon une variante, chacune des vannes motorisées comprend sa propre unité de contrôle d'ouverture. On entend ici par ouverture d'une vanne un niveau d'ouverture, de sorte qu'un contrôle de l'ouverture d'une vanne implique des opérations d'ouverture ou de fermeture de la vanne grâce au moteur couplé à un élément d'obturation de la canalisation interne à la vanne (un boisseau, par exemple). Chacun des échangeurs thermiques 110, 120 et 130 comprend une sortie de canalisation secondaire par laquelle l'hydrogène liquide transite en sortie de la ou des chambres secondaires de l'échangeur thermique. Ainsi, l'échangeur thermique 110 comprend une sortie 111 de canalisation secondaire, l'échangeur thermique 120 comprend une sortie 121 de canalisation secondaire et l'échangeur thermique 130 comprend une sortie 131 de canalisation secondaire. Selon un mode de réalisation, les sorties 111, 121 et 131 de canalisation secondaire des échangeurs sont raccordées à des installations utilisant de l'hydrogène dans l'aéronef, telles que, à titre d'exemple une ou plusieurs piles à combustible. Selon un mode de réalisation, l'unité de contrôle de la vanne motorisée 115 est configurée pour obtenir une température inférieure à 430K au point de mesure du dispositif de mesure de température 116 du fluide primaire, de sorte que l'eau contenue dans le fluide primaire puisse être séparée du fluide primaire grâce au dispositif de purge 117, lequel comprend une sortie de purge 118 ; l'unité de contrôle de la vanne motorisée 125 est configurée pour obtenir une température comprise entre 195K et 220K au point de mesure du dispositif de mesure de température 126 du fluide primaire, de sorte que le dioxyde de carbone (CO2) contenu dans le fluide primaire puisse être séparé du fluide primaire grâce au dispositif de purge 127, lequel comprend une sortie de purge 128, et l'unité de contrôle de la vanne motorisée 135 est configurée pour obtenir une température comprise entre 77K et 96K au point de mesure du dispositif de mesure de température 136 du fluide primaire, de sorte que de l'oxygène (ou plus exactement dioxygène) sous forme liquide (LO2) contenu dans le fluide primaire puisse être séparé du fluide primaire grâce au dispositif de purge 137, lequel comprend une sortie de purge 138. Selon ce mode de réalisation, de l'azote est alors disponible à la sortie 139 du système de génération de gaz inerte. Avantageusement, tout ou partie de cet azote est transféré dans l'espace disponible d'un ou de plusieurs systèmes à hydrogène, de sorte à combler cet ou ces espaces de gaz inerte et à réduire conséquemment l'inflammabilité du contenu de ce ou de ces systèmes. Selon ce mode de réalisation, trois refroidissements successifs opérés par les échangeurs thermiques 110, 120 et 130 permettent donc d'obtenir de l'azote en sortie 139 du système de génération de gaz inerte. Avantageusement et astucieusement, l'utilisation de l'hydrogène liquide pour la génération de gaz inerte dans le système de génération de gaz inerte 10 permet à la fois de répondre à un besoin de réchauffer l'hydrogène liquide en vue d'une utilisation à bord de l'aéronef, par exemple dans une pile à combustible, et à la fois de refroidir l'air chaud comprimé pour opérer une distillation fractionnée permettant d'obtenir un gaz inerte, tel que de l'azote.

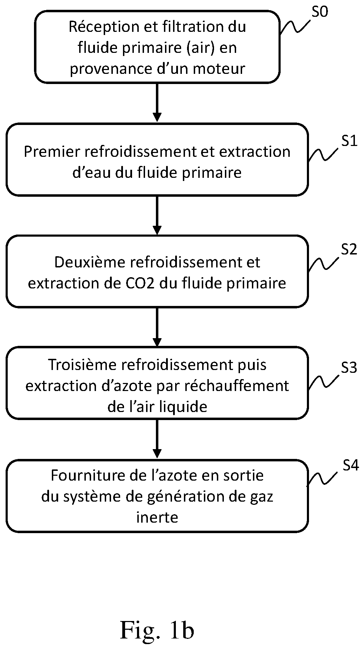

La **Fig. 1b** est un diagramme illustrant un procédé de génération d'azote dans le système 10 de génération de gaz inerte.

Lors d'une étape **S0,** de l'air comprimé, en provenance d'un ou plusieurs moteurs de l'aéronef qui embarque le système 10 de génération d'un gaz inerte et qui présente une pression supérieure à 6 bars, est reçu par l'entrée 100 du système 10. L'air comprimé est ensuite filtré par le filtre 101. Un premier refroidissement de cet air, encore appelé ici fluide primaire, est opéré lors d'une étape **S1** dans l'échangeur thermique 110, dont la canalisation d'entrée, portion de la canalisation primaire 102, est reliée à la sortie du filtre 101. Ce refroidissement du fluide primaire est opéré à l'aide d'hydrogène liquide qui transite dans la canalisation secondaire de l'échangeur thermique 110. Le débit d'hydrogène liquide dans cette canalisation secondaire est contrôlé par la vanne motorisée 115 de sorte que, toujours lors de l'étape S1, une extraction d'eau puisse être réalisée par le dispositif de purge 117. L'eau est condensée en maintenant la température en sortie de la canalisation primaire 102 de l'échangeur thermique 110 à une température inférieure à 430K. L'eau condensée est extraite de la canalisation primaire 102 par la sortie 118 du dispositif de purge 117, après quoi le fluide primaire dépourvu d'eau est conduit dans la portion de canalisation primaire 102 de l'échangeur thermique 120. Un deuxième refroidissement du fluide primaire est alors opéré lors d'une étape **S2** en utilisant, là encore, de l'hydrogène liquide comme fluide de refroidissement. Dans cet échangeur thermique, le fluide primaire, c'est-à-dire l'air comprimé et filtré inséré dans le système 10, alors dépourvu d'eau, est refroidi de sorte que sa température en sortie de la portion de canalisation primaire 102 de l'échangeur thermique 120 soit comprise entre 195K et 220K, ce qui permet d'obtenir le dioxyde de carbone compris dans le fluide primaire sous une forme liquide. Ce dioxyde de carbone sous forme liquide est alors extrait du fluide primaire par la sortie 128 du dispositif de purge 127, toujours lors de l'étape S2. Le fluide primaire est à ce stade le reste de l'air comprimé inséré à l'entrée du système, après extraction de l'eau et du dioxyde de carbone. Il est conduit sous cette forme vers l'échangeur thermique 130 pour y être soumis, lors d'une étape S3, à un troisième refroidissement utilisant l'hydrogène liquide, de sorte que sa température en sortie de la portion de conduite primaire 102 de l'échangeur thermique 130 est comprise entre 77K et 96K. A cette température, l'oxygène (ou plus exactement le dioxygène) est présent dans le fluide primaire sous forme liquide et est extrait, toujours au cours l'étape S3, par la sortie 138 du dispositif de purge 137. Le fluide primaire disponible dans la canalisation primaire 102, à la sortie 139 du dispositif de purge 137 est alors fourni, lors d'une étape **S4,** en sortie du système 10 de génération de gaz inerte, sous forme d'azote, à l'état gazeux. Avantageusement, il peut être utilisé pour ses propriétés d'ininflammabilité dans un ou plusieurs systèmes d'hydrogène d'un aéronef qui embarque le système 10 de génération de gaz inerte ou encore valorisé à un quelconque endroit de l'aéronef où ses propriétés de gaz inerte peuvent être mises à profit.

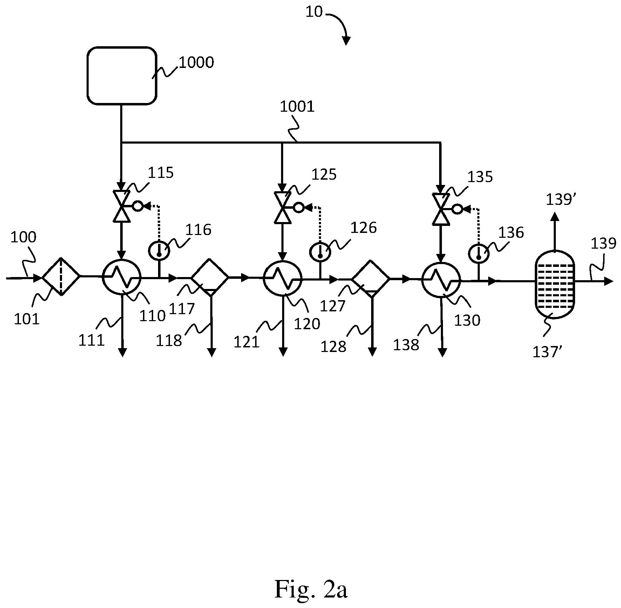

La **Fig. 2a** représente de façon schématique une première variante du système 10 de génération de gaz inerte tel que précédemment décrit en rapport avec la Fig. la. Cette première variante du système 10 comprend de nombreux éléments communs avec le système de génération de gaz inerte décrit sur la Fig.1a. Ainsi, les échangeurs thermiques 110, 120 et 130, ainsi que les vannes motorisées 115, 125 et 135 et les dispositifs de contrôle de températures 116, 126 et 136 sont agencés de la même façon que dans le système tel que décrit en rapport avec la Fig. la. Il en est de même pour l'entrée 100, le filtre d'entrée 101, la canalisation 102 ainsi que le réservoir 1000 d'hydrogène liquide et la canalisation 1001 de distribution de l'hydrogène liquide vers les échangeurs thermiques 110, 120 et 130, via, respectivement, les vannes motorisées 115, 125 et 135. Cependant, selon cette variante, la partie du système en aval de l'échangeur thermique 130 est agencée différemment, de sorte que le dispositif de purge 137 est remplacé par un dispositif 137'de chauffe du fluide primaire qui comprend deux sorties 139 et 139' et que le contrôle de la vanne motorisée 135, configurée pour réguler la température du fluide primaire en sortie de la portion de canalisation primaire 102 de l'échangeur thermique 130, est adapté pour que le fluide primaire présente une température comprise entre 63K et 77K à cet endroit, c'est-à-dire qu'il se présente sous la forme d'air liquide. L'entrée du dispositif de chauffe 137' est connectée à la portion de canalisation primaire 102 sortant de l'échangeur thermique 130. Un réchauffement de l'air liquide ainsi obtenu, au sein du dispositif de chauffe 137', permet d'extraire l'azote sous forme gazeuse à la sortie 139' du dispositif de chauffe 137' et de fournir un air appauvri en azote, à la sortie 139 du système 10 de génération de gaz inerte.

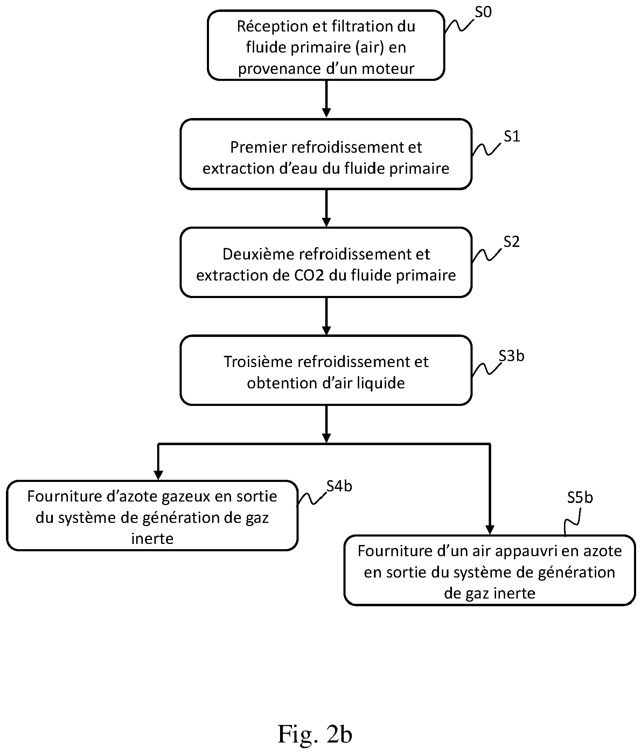

La **Fig. 2b** est un diagramme illustrant un procédé de génération d'azote, sous forme gazeuse, dans le système 10 de génération de gaz inerte agencé selon la première variante de réalisation décrite ci-avant. Les étapes S0, S1, S2 demeurent inchangées au regard du procédé décrit en rapport avec la Fig. 1b, c'est-à-dire que les deux premières étapes de séparation de composantes du fluide primaire, qui visent respectivement à extraire l'eau et le dioxyde de carbone (encore appelé couramment gaz carbonique) du fluide primaire, sont effectuées de la même façon que selon le procédé décrit en rapport avec la Fig. 1b. Cependant, selon cette variante et après l'étape d'extraction du dioxyde de carbone, le refroidissement du fluide primaire opéré dans l'échangeur thermique 130 est adapté pour que le fluide primaire présente une température comprise entre 63K et 77K, de sorte que, lors d'une étape **S3b,** de l'air sous forme liquide soit obtenu, et de sorte que, lors d'une étape **S4b,** de l'azote sous forme gazeuse soit extrait du fluide primaire pour être rendu disponible en sortie 139' du système 10, et de l'air appauvri en azote puisse être rendu disponible en sortie 139 du système 10 lors d'une étape **S5b.**

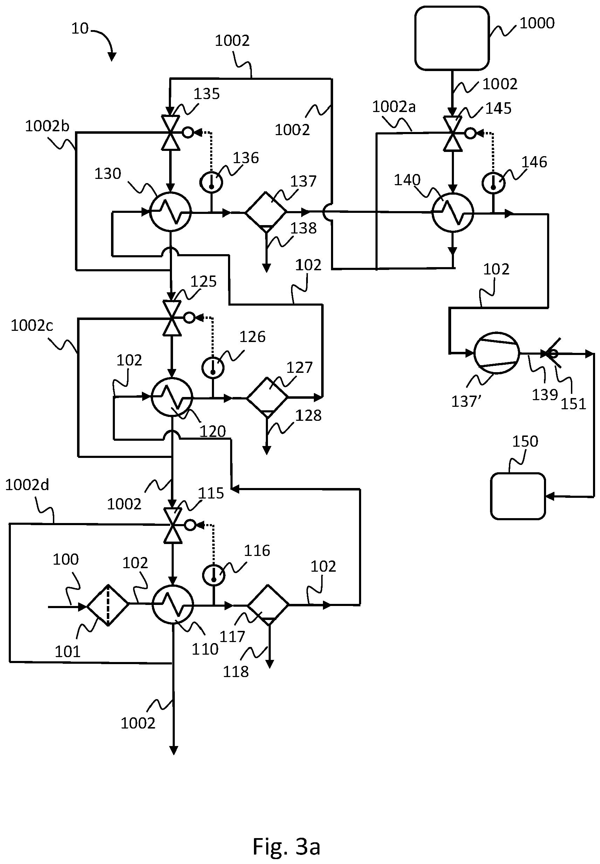

La **Fig. 3a** représente de façon schématique une deuxième variante de réalisation du système 10 de génération de gaz inerte tel que déjà décrit en rapport avec la Fig. la. Selon cette variante, les différents échangeurs thermiques utilisés ne sont pas raccordés parallèlement au réservoir 1000 d'hydrogène liquide via la canalisation 1001, comme dans les variantes de réalisation décrites en rapport avec les Fig. la et Fig. 2a. Selon cette deuxième variante, les canalisations secondaires des échangeurs thermiques 110, 120 et 130, dans lesquelles circule l'hydrogène liquide utilisé pour le refroidissement du fluide primaire, sont agencées en série. En outre un quatrième échangeur thermique 140 est utilisé en aval de l'échangeur thermique 130, sur la canalisation primaire 102, pour opérer une liquéfaction de l'azote obtenu en sortie de la portion de canalisation primaire 102 de l'échangeur thermique 130. A cet endroit un dispositif de contrôle de température 146, configuré pour commander une vanne motorisée 145, permet de réguler la température du fluide primaire. Selon cette variante de réalisation, la sortie de la portion de canalisation primaire 102 de l'échangeur thermique 140 est connectée à une pompe 137' dont la sortie est connectée à un réservoir 150 de stockage d'azote liquide, via une soupape anti-retour 151 disposée sur la sortie 139 du système 10 de génération de gaz inerte.

Selon cette variante, l'hydrogène liquide stocké dans le réservoir 1000 d'hydrogène liquide transite à travers une canalisation secondaire 1002 de distribution. La canalisation secondaire 1002 de distribution de l'hydrogène traverse successivement la vanne motorisée 145 (qui permet de réguler la température du fluide primaire en sorte de la canalisation primaire 102 de l'échangeur thermique 140), et la portion de canalisation secondaire 1002 de l'échangeur thermique 140, puis la vanne motorisée 135 (qui permet de réguler la température du fluide primaire en sortie de la canalisation primaire 102 de l'échangeur thermique 130), la portion de canalisation secondaire 1002 de l'échangeur thermique 130, puis la vanne motorisée 125 (qui permet de réguler la température du fluide primaire en sortie de la canalisation primaire 102 de l'échangeur thermique 120), et la portion de canalisation secondaire 1002 de l'échangeur thermique 120, puis enfin la vanne motorisée 115 (qui permet de réguler la température du fluide primaire en sortie de la canalisation primaire 102 de l'échangeur thermique 110), la portion de canalisation secondaire 1002 de l'échangeur thermique 110. Chacune des vannes motorisées 135, 125 et 115 est associée à une canalisation dite de « bypass » permettant d'alimenter la ou les portions de canalisation secondaires 1002 en aval (et donc la ou les vannes agencées en aval sur la canalisation secondaire 1002), lorsque la vanne qu'elle contourne est configurée pour ne laisser passer de l'hydrogène qu'à un débit limité dans le but de réguler la température en sortie de la canalisation primaire d'un échangeur. Ainsi, une portion « bypass » 1002a de canalisation secondaire, est agencée pour opérer un contournement (dit « bypass ») de l'échangeur thermique 140 lorsque la vanne motorisée 145 est configurée pour limiter le débit d'hydrogène distribué dans la canalisation secondaire 1002, une portion « bypass » 1002b de canalisation secondaire, est agencée pour opérer un contournement de l'échangeur thermique 130 lorsque la vanne motorisée 135 est configurée pour limiter le débit d'hydrogène distribué dans la canalisation secondaire 1002, une portion « bypass » 1002c de canalisation secondaire, est agencée pour opérer un contournement de l'échangeur thermique 120 lorsque la vanne motorisée 125 est configurée pour limiter le débit d'hydrogène distribué dans la canalisation secondaire 1002 et une portion « bypass » 1002d de canalisation secondaire, est agencée pour opérer un contournement de l'échangeur thermique 110 lorsque la vanne motorisée 115 est configurée pour limiter le débit d'hydrogène distribué dans la canalisation secondaire 1002.

Un tel agencement des échangeurs 140, 130, 120 et 110 disposés en série sur la canalisation 1002 de distribution d'hydrogène, de sorte à opérer séquentiellement des refroidissements successifs dans ces échangeurs, permet avantageusement de réchauffer progressivement l'hydrogène initialement stocké à une température de 20K, lorsque celui-ci transite successivement par les différentes portions de la canalisation secondaire 1002, en vue de l'utiliser ultérieurement à bord de l'aéronef, par exemple dans une pile à combustible. Avantageusement, l'échangeur disposé le plus en amont sur la canalisation 1002 de distribution est celui où la température la plus basse est requise pour opérer un refroidissement du fluide primaire, et ainsi de suite.

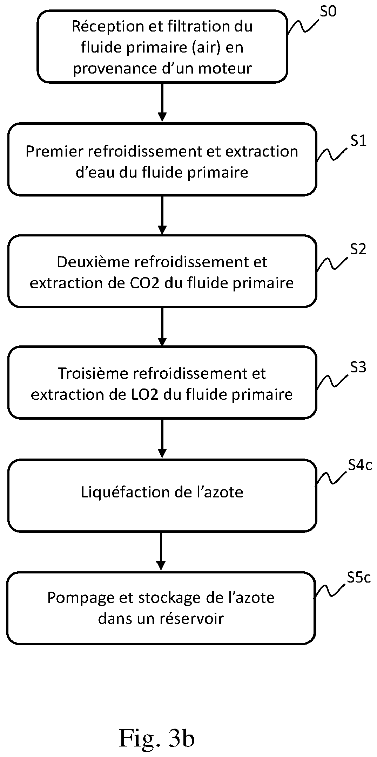

La **Fig. 3b** est un diagramme illustrant un procédé de génération d'azote, sous forme gazeuse, dans le système 10 de génération de gaz inerte agencé selon la deuxième variante de réalisation décrite ci-avant. Les étapes S0, S1, S2 et S3, sont semblables à celles décrites précédemment, selon le mode ou la variante de réalisation en rapport avec les Fig. la et Fig. 1b. C'est-à-dire que les opérations de filtrage, de séparation de composantes du fluide primaire visant à extraire l'eau du fluide primaire, puis le dioxyde de carbone, puis l'oxygène sous une forme liquide, sont similaires à ce qui est précédemment décrit. Ainsi, les températures de portions de canalisation primaire 102 au point de mesure où sont agencés les dispositifs 116, 126 et 136 de mesure de températures sont identiques à celles décrites précédemment dans le procédé en rapport avec la Fig.la. Cependant, la température du fluide primaire est régulée en sortie de la portion de canalisation primaire 102 de l'échangeur thermique 140, de sorte à y obtenir de l'azote sous une forme liquide lors d'une étape **S4c,** lequel azote est ensuite pompé par la pompe 137' avant stockage dans le réservoir d'azote 150 lors d'une étape **S5c.**

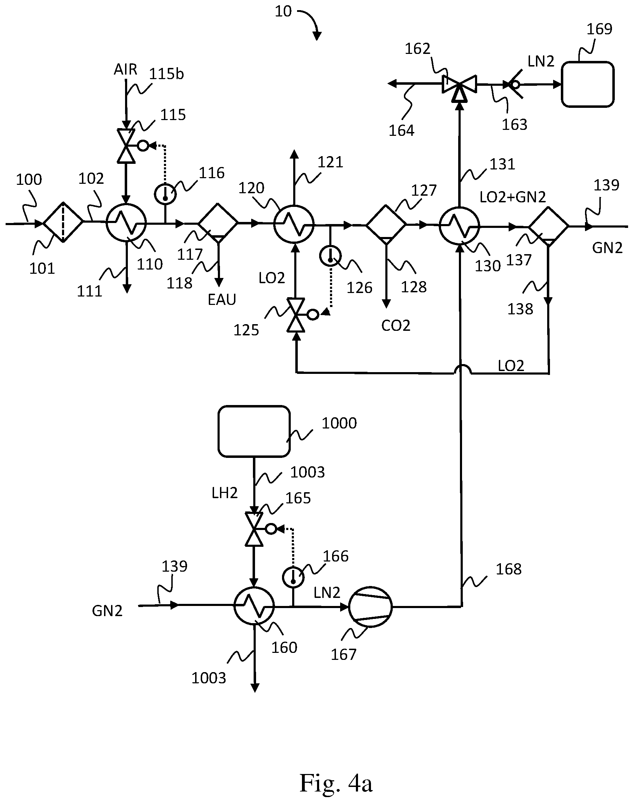

La **Fig. 4a** représente de façon schématique une troisième variante de réalisation du système de génération de gaz inerte déjà décrit en rapport avec la Fig. la. Selon cette variante de réalisation, les portions de canalisation secondaires des différents échangeurs thermiques 110, 120, 130 et 140 successivement utilisés pour participer à une distillation fractionnée de l'air comprimé, c'est-à-dire les portions de canalisation dans chacune desquelles transite un fluide visant à refroidir, par échange thermique, le fluide primaire présent dans la canalisation primaire 102, sont reliées à des sources différentes de fluide réfrigérant. Selon cette variante de réalisation, l'entrée 115b de la vanne motorisée 115 est connectée à une entrée d'air ambiant (repéré « AIR » sur la Fig. 4a), l'entrée de la vanne motorisée 125 est reliée à la sortie 138 du dispositif de purge 137, configuré pour extraire de l'oxygène à l'état liquide (repéré « LO2 » sur la Fig. 4a) du fluide primaire en aval de l'échangeur thermique 130, et l'entrée d'une vanne motorisée 165, configurée pour réguler la température du fluide primaire obtenu à partir de la sortie 139 du système 10, en collaboration avec un échangeur thermique 160, est reliée au réservoir 1000 d'hydrogène (repéré « LH2 » sur la Fig. 4a) par le biais d'une canalisation de distribution 1003. Une sortie 121 de la canalisation secondaire de l'échangeur thermique 120, permet d'orienter l'oxygène liquide utilisé comme refroidisseur dans l'échangeur thermique 120, en vue d'une éventuelle utilisation ultérieure, par exemple pour une pile à combustible embarquée dans l'aéronef. Le contrôle de la température en sortie de la portion de canalisation primaire 102 de l'échangeur thermique 160, est assuré grâce à la vanne motorisée 165 contrôlée à partir d'un dispositif de mesure de température 166.

En outre, la portion de canalisation secondaire de l'échangeur thermique 130 est connectée à la sortie 168 d'une pompe 167 configurée pour opérer un pompage du fluide primaire sous la forme d'azote liquide (repéré « LN2 » sur la Fig. 4a) disponible en sortie de l'échangeur thermique 160, sur la canalisation primaire 102, en aval de l'échangeur thermique 160 agencé pour contrôler la température du fluide primaire prélevé à la sortie 139. La pompe 167 permet ainsi de pomper de l'azote à l'état liquide dans la portion de canalisation secondaire de l'échangeur thermique 130, en vue d'opérer un refroidissement du fluide primaire, et de stocker ensuite cet azote liquide dans un réservoir 169, via une canalisation 163 comprenant une soupape anti-retour.

Une vanne à deux sorties 162, motorisée et contrôlée, permet d'orienter l'azote encore à l'état gazeux, avant refroidissement complet depuis une sortie 131 de la portion de canalisation secondaire de l'échangeur thermique 130, vers une sortie 164, lors d'une mise en route du système, puis d'orienter l'azote à l'état liquide, vers le réservoir 169 d'azote liquide quand le système opère en conditions nominales. Le contrôle de la vanne d'orientation 162 est opéré grâce à un contrôleur non représenté sur la figure, adapté pour déterminer l'état du fluide primaire en différents endroits du système 10, grâce à des températures relevées par les dispositifs de mesure de température. Ainsi, les opérations successives de séparations de composantes du fluide primaire peuvent être réalisées en obtenant des températures adéquates dans les différentes portions de la canalisation primaire 102 et des fluides dont la proximité pourrait être préjudiciable à la sécurité en cas de fuite ou de rupture d'un élément du système sont avantageusement maintenus éloignés les uns des autres. Avantageusement, l'oxygène liquide extrait à la sortie 138 du dispositif de purge 137 peut être utilisé pour le fonctionnement d'une ou plusieurs piles à combustibles utilisées dans l'aéronef.

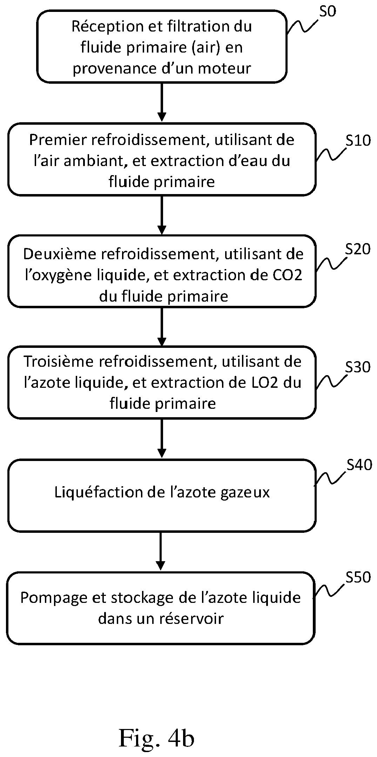

La **Fig. 4b** est un diagramme illustrant un procédé de génération d'azote, sous forme liquide, dans le système 10 de génération de gaz inerte agencé selon la troisième variante de réalisation décrite ci-avant. Dans le système 10 de génération de gaz inerte agencé selon cette troisième variante, l'étape **S0** de filtrage de l'air comprimé acheminé à l'entrée du système 10 demeure inchangée par rapport aux variantes précédemment décrites. Puis, de façon similaire à ce qui est opéré dans le procédé décrit en rapport avec la Fig. 1b, un refroidissement du fluide primaire est opéré lors d'une étape **S10** pour extraire l'eau du fluide primaire, en aval de l'échangeur thermique 110. Dans cette troisième variante du procédé, ce premier refroidissement du fluide primaire est réalisé avec de l'air ambiant prélevé à l'extérieur de l'aéronef qui embarque le système 10 de génération de gaz inerte. L'air ambiant est inséré pour ce faire dans la portion de canalisation secondaire de l'échangeur thermique 110 après que son débit dans cette canalisation ait été régulé par la vanne motorisée 115. L'air ambiant est ensuite récupéré via une sortie 111 de la canalisation secondaire de l'échangeur thermique 110 pour être possiblement utilisé à un autre endroit dans l'aéronef. Un deuxième refroidissement du fluide primaire est ensuite opéré lors d'une étape **S20,** en utilisant dans l'échangeur thermique 120 de l'oxygène liquide prélevé à la sortie 138 du dispositif de purge 137. Ainsi, astucieusement, un fluide extrait du fluide primaire lors d'une étape de distillation fractionnée en vue de générer un gaz inerte est utilisé comme réfrigérant pour une autre étape de ladite distillation fractionnée. Un troisième refroidissement du fluide primaire est ensuite opéré lors d'une étape **S30,** dans l'échangeur thermique 130, en utilisant de l'azote liquide obtenu à partir d'un quatrième refroidissement du fluide primaire, lequel est opéré lors d'une étape **S40** visant à obtenir une liquéfaction de l'azote disponible à l'état gazeux dans la canalisation de sortie 139. Ce quatrième refroidissement du fluide primaire est opéré grâce à de l'hydrogène liquide en provenance du réservoir 1000 d'hydrogène, utilisé comme refroidisseur dans l'échangeur thermique 160. L'azote liquide ainsi obtenu est ensuite pompé et stocké dans le réservoir 169 d'azote liquide, lors d'une étape **S50.**

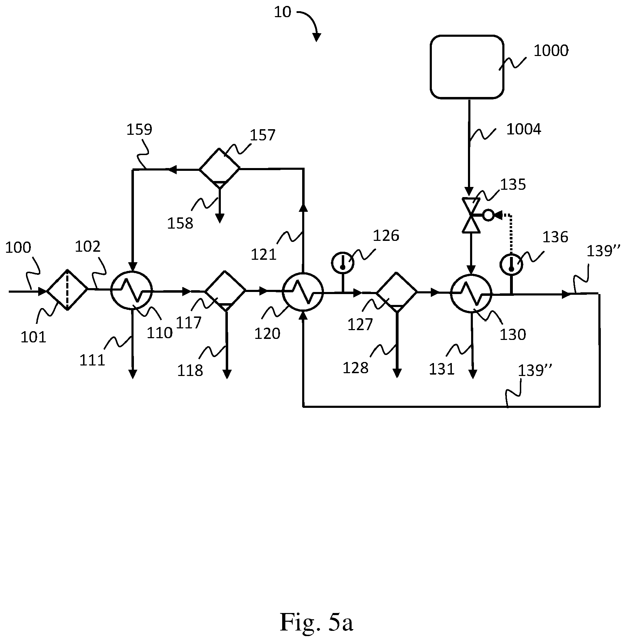

La **Fig. 5a** représente de façon schématique une quatrième variante de réalisation du système 10 de génération d'un gaz inerte déjà représenté sur la Fig. la. Selon cette quatrième variante, le premier refroidissement du fluide primaire inséré en entrée 100 du système 10, puis filtré dans le filtre 101 en entrée de la canalisation primaire 102, est réalisé dans l'échangeur thermique 110 au moyen d'azote à l'état gazeux. L'azote à l'état gazeux utilisé pour ce premier refroidissement est obtenu par extraction de l'oxygène liquide du fluide primaire dans un dispositif de purge 157. Le fluide primaire dépourvu d'oxygène liquide est conduit vers la portion de canalisation secondaire de l'échangeur 110 via une canalisation 159. L'oxygène liquide est extrait par une sortie de purge 158 du dispositif de purge 157 et l'azote gazeux résiduel est conduit via une canalisation 159 depuis le dispositif de purge 157 jusqu'à la portion de canalisation secondaire de l'échangeur 110. L'azote gazeux utilisé comme refroidisseur dans l'échangeur thermique 110 est ensuite disponible en sortie 111 de l'échangeur thermique 110 pour une utilisation comme gaz inerte. Là encore, l'oxygène liquide peut être utilisé pour le fonctionnement d'une pile à combustible embarquée dans l'aéronef.

Selon cette variante de réalisation, l'entrée de la portion de canalisation secondaire de l'échangeur thermique 120, utilisé pour le refroidissement du fluide primaire en vue d'une extraction de dioxyde de carbone, est reliée à la sortie de la canalisation primaire de l'échangeur thermique 130, lequel est ici utilisé pour obtenir de l'air liquide par refroidissement du fluide primaire, après extractions successives de l'eau et du dioxyde de carbone opérées respectivement dans les dispositifs de purge 117 et 127. Le refroidissement opéré dans l'échangeur 130 est réalisé grâce à de l'hydrogène liquide, en provenance du réservoir 1000 d'hydrogène liquide via une canalisation 1004 puis via la vanne motorisée 135, qui transite dans la portion de canalisation secondaire de l'échangeur thermique 130. La vanne motorisée 135 de régulation de débit de l'hydrogène liquide dans la portion de conduite secondaire de l'échangeur thermique 130 est contrôlée à partir d'une température mesurée par le dispositif 136 de mesure de température du fluide primaire, agencé en sortie de la portion de canalisation primaire 102 de l'échangeur thermique 130. Le flux d'air liquide est transmis entre la sortie de la canalisation primaire de l'échangeur thermique 130 et l'entrée de la canalisation secondaire de l'échangeur thermique 120 à travers une canalisation 139".

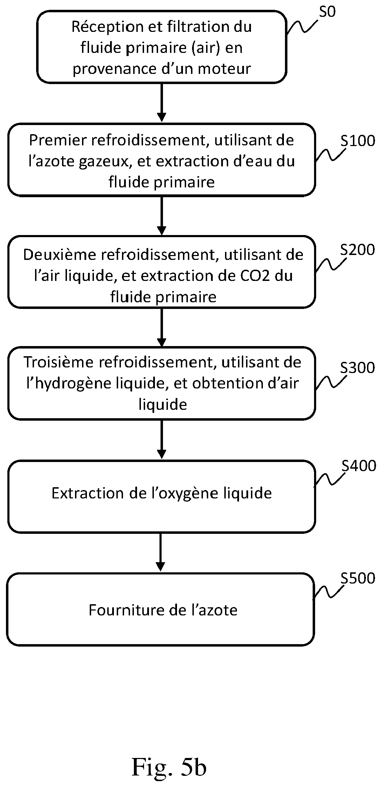

La **Fig. 5b** est un diagramme illustrant un procédé de génération d'azote, sous forme gazeuse, dans le système 10 de génération de gaz inerte agencé selon la quatrième variante de réalisation décrite ci-avant.

L'étape **S0** de réception de l'air comprimé dans le système 10, et de filtrage de cet air est toujours identique à l'étape S0 opérée selon les autres variantes. Puis, selon cette variante, le premier refroidissement du fluide primaire est opéré lors d'une étape **S100** en utilisant de l'azote gazeux obtenu par extraction d'oxygène liquide lors d'une étape **S400** à partir d'un air liquide servant de refroidisseur lors du second refroidissement du fluide primaire, opéré lors d'une étape **S200.** Cet air liquide est quant à lui obtenu après un troisième refroidissement du fluide primaire, dans l'échangeur thermique 130 et lors d'une étape **S300,** à l'aide d'hydrogène liquide. Après extraction de l'eau, du dioxyde de carbone, obtention d'air liquide et extraction de l'oxygène liquide à partir du fluide primaire, l'azote à l'état gazeux est alors disponible en sortie 111 de l'échangeur thermique 110.

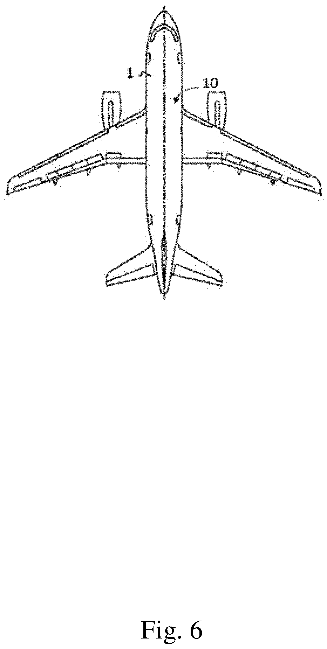

La **Fig. 6** représente un aéronef 1 comprenant le système de génération de gaz inerte 10 selon l'une des variantes de réalisation précédemment décrites. L'utilisation d'un tel système de génération de gaz inerte est particulièrement avantageuse à bord d'un aéronef dans la mesure où l'hydrogène stocké à une température de 20K, dans un ou plusieurs réservoirs, doit être réchauffé pour pouvoir être utilisé dans une pile à combustible, et que sa température initiale permet d'opérer des refroidissements successifs d'un air chaud comprimé en vue de réaliser des opérations de distillation fractionnée et de générer un gaz inerte tel que de l'azote pour réduire l'inflammabilité du contenu de certaines parties du système de distribution d'hydrogène.

## Revendications

1. Procédé de génération d'un fluide inerte, ledit procédé étant exécuté dans un système (10) de génération d'un gaz inerte d'un aéronef (1), le fluide inerte étant obtenu par séparations successives (S1, S2, S3) de composantes d'un fluide primaire initialement prélevé sous forme d'air chaud comprimé, le procédé comprenant au moins une séparation de composantes (S1), par changement de phase d'une composante dudit fluide primaire, utilisant un échangeur thermique (110) configuré pour opérer un refroidissement dudit fluide primaire grâce à de l'hydrogène liquide, l'échangeur thermique (110) étant alimenté en hydrogène liquide prélevé dans un réservoir (1000) de l'aéronef (1),
le procédé étant **caractérisé en ce qu'**il comprend une première étape (S1), de séparation de composantes dudit fluide primaire, par refroidissement dudit fluide primaire, adaptée à une extraction d'eau dudit fluide primaire, sous forme liquide, et une deuxième étape (S2), de séparation de composantes dudit fluide primaire, par refroidissement dudit fluide primaire, adaptée à une extraction de dioxyde de carbone dudit fluide primaire, sous forme liquide.

2. Procédé de génération d'un fluide inerte selon la revendication 1, le procédé comprenant une troisième étape (S3), de séparation de composantes dudit fluide primaire, par refroidissement dudit fluide primaire, subséquente auxdites première (S1) et deuxième (S2) étapes, et adaptée à une extraction de dioxygène dudit fluide primaire, sous forme liquide.

3. Procédé de génération d'un fluide inerte selon la revendication 2, le procédé comprenant une étape de liquéfaction (S4c) dudit fluide primaire, subséquente auxdites première (S1), deuxième (S2) et troisième (S3) étapes de séparation de composantes, suivie d'une étape de pompage (S5c) dudit fluide primaire dans un réservoir, sous la forme d'azote liquide.

4. Procédé de génération d'un fluide inerte selon la revendication 1 comprenant en outre une étape de liquéfaction (S3b) dudit fluide primaire, subséquente auxdites première (S1) et deuxième (S2) étapes, suivie d'une étape de réchauffement (S4b) dudit fluide primaire liquéfié, adaptée à une extraction d'azote sous forme gazeuse.

5. Procédé de génération d'un fluide inerte selon l'une des revendications 1 à 4, dans lequel les étapes successives (S1, S2, S3) de séparation de composantes dudit fluide primaire, par refroidissement dudit fluide primaire, utilisent chacune un échangeur thermique (110, 120, 130), les échangeurs thermiques utilisés étant alimentés en parallèle, chacun via une vanne motorisée (115, 125, 135), depuis un réservoir d'hydrogène liquide (1000) de l'aéronef (1).

6. Procédé de génération d'un fluide inerte selon l'une des revendications 1 à 4, dans lequel les étapes successives (S1, S2, S3, S4c) de séparation de composantes dudit fluide primaire, par refroidissement dudit fluide primaire, utilisent chacune un échangeur thermique (110, 120, 130, 140), les échangeurs thermiques étant agencés en série de sorte que l'hydrogène liquide utilisé en entrée d'un échangeur thermique (120) pour le refroidissement dudit fluide primaire lors d'une étape (S2) de séparation de composantes, provienne au moins partiellement d'une sortie d'un autre échangeur thermique (130) utilisé pour le refroidissement dudit fluide primaire lors d'une autre étape (S3) de séparation de composantes dudit fluide primaire.

7. Procédé de génération d'un fluide inerte selon la revendication 3 dans lequel la première étape (S10) de séparation de composantes dudit fluide primaire comprend un refroidissement du fluide primaire dans un échangeur thermique (110) grâce à un air ambiant, la deuxième étape (S20) de séparation de composantes du fluide primaire comprend un refroidissement du fluide primaire dans un échangeur thermique (120) au moyen dudit dioxygène sous forme liquide extrait lors d'une troisième étape (S30) de séparation, et ladite troisième étape d'extraction du dioxygène sous forme liquide, comprend un refroidissement du fluide primaire au moyen d'azote liquide obtenu par une étape de liquéfaction grâce à de l'hydrogène liquide en provenance dudit réservoir d'hydrogène liquide (1000).

8. Procédé de génération d'un fluide inerte selon la revendication 1 comprenant en outre une étape de liquéfaction dudit fluide primaire, subséquente auxdites première (S 100) et deuxième (S200) étapes, dans lequel les première (S100) et deuxième (S200) étapes de séparation de composantes du fluide primaire comprennent chacune un refroidissement du fluide primaire dans un échangeur thermique (110, 120), au moyen du fluide primaire liquéfié et dans lequel ladite étape (S300) de liquéfaction du fluide primaire comprend un refroidissement du fluide primaire dans un échangeur thermique (130), au moyen dudit hydrogène liquide.

9. Système (10) de génération d'un fluide inerte, embarqué dans un aéronef (1), le système (20) de génération comprenant une pluralité de dispositifs configurés pour opérer chacun, successivement, une séparation de composantes d'un fluide primaire initialement prélevé sous forme d'air chaud comprimé, le système comprenant au moins un échangeur thermique (110) configuré pour opérer une séparation de composantes, par changement de phase d'une composante dudit fluide primaire, opérant un refroidissement dudit fluide primaire grâce à de l'hydrogène liquide, alimenté en hydrogène liquide prélevé dans un réservoir (1000) de l'aéronef,
le système étant **caractérisé en ce que** ladite pluralité de dispositifs comprend un premier dispositif de purge 117 prévu pour séparer l'eau contenue dans le fluide primaire, sous forme liquide, et un deuxième dispositif de purge 127 prévu pour séparer le dioxyde de carbone contenu dans le fluide primaire, sous forme liquide.
